# EUROPÄISCHE PATENTSCHRIFT

(11) **EP 2 644 472 B1**
(45) Veröffentlichungstag und Bekanntmachung des Hinweises auf die Patenterteilung: **16.05.2018**
(21) Anmeldenummer: 13160202.1
(22) Anmeldetag: 20.03.2013
(51) Int. Cl.: B62B 3/14

(54) **Einkaufswagen**
Shopping trolley
Chariot

(30) Priorität: 26.03.2012 DE 102012102568
(43) Veröffentlichungstag der Anmeldung: 02.10.2013
(73) Patentinhaber: Wanzl Metallwarenfabrik GmbH, 89340 Leipheim (DE)
(72) Erfinder: Kraus, Bernd, 89356 Haldenwang (DE); Seiter, Daniela, 74078 Heilbronn (DE)

(56) Entgegenhaltungen:
- DE-A1- 2 637 974
- DE-U1-202006 016 679
- US-A1- 2004 090 024

## Beschreibung

Die Erfindung betrifft einen stapelbaren Transportwagen mit den Merkmalen im Oberbegriff des Hauptanspruchs. Derartige Transportwägen werden von der US 2004/0090024 A1 oder von der DE 26 37 974 A1 gezeigt. Stapelbare Transportwagen sind aus dem Stand der Technik bekannt. Sie weisen einen Korb zur Aufnahme von Ware auf. Die Rückseite des Korbes ist aus einer in das Korbinnere verschwenkbaren Klappe gebildet. Die Klappe weist zur Aufnahme eines Kindes eine mit Beinöffnungen versehene Stützwand auf, ferner sind eine Rückwand und eine Sitzplatte vorgesehen.

Eine solche Klappe ist beispielsweise in der EP 1 562 816 B1 beschrieben. Diese stellt eine bevorzugte Ausführungsform einer Klappe dar.

Die Sitzplatte weist zum Sichern an der Rückwand so genannte Stützfinger auf und die Rückwand ist mit Erweiterungen versehen, so dass die Sitzplatte in verbesserter Weise an der Rückwand montiert werden kann. Ferner ist aus dem Stand der Technik z.B. aus der EP 0 570 737 B1 eine Abdeckung bekannt, die drehbar an der Stützwand angeordnet und derart ausgeführt ist, dass sie die Beinöffnungen der Stützwand verdecken kann. Nun kommt es vor, dass flache Waren zwischen Abdeckung und Sitzplatte gelegt werden, die Kassiererin an der Kasse dies jedoch nicht bemerkt. Dadurch entstehen Inventurdifferenzen.

Die Aufgabe der vorliegenden Erfindung liegt nun darin, einen stapelbaren Wagen aufzuzeigen, bei dem die Abdeckung entsprechend geändert wird, so dass diese Inventurdifferenzen unterbunden werden können.

Die Erfindung löst die Aufgabe mit den Merkmalen im Hauptanspruch. Weitere vorteilhafte Ausführungen sind in den Unteransprüchen beschrieben.

Durch die transparente Abdeckung sind Waren zwischen Abdeckung und Sitzplatte stets zu erkennen. Auch bei der Variante, dass die Abdeckung Öffnungen aufweist, ist für die Kassiererin ersichtlich, wenn sich Waren zwischen beiden Bauteilen befinden. Dies ist möglich, wenn die Klappe geöffnet ist, d.h. diese als Kindersitz nutzbar ist, aber auch bei geschlossener Klappe.

Die Kassiererin erspart sich durch die verbesserte Abdeckung das aufwendige manuelle Öffnen der Klappe.

Die Erfindung wird anhand eines Ausführungsbeispiels näher erläutert. Es zeigt
- Fig. 1: eine Sitzplatte,
- Fig. 2: eine Abdeckung, sowie
- Fig. 3: eine Klappe mit Sitzplatte und Abdeckung.

Die Erfindung betrifft einen stapelbaren Transportwagen mit einem zur Aufnahme von Ware bestimmten Korb. Die Rückseite des Wagens bildet eine in das Korbinnere verschwenkbare Klappe 1.

Die Klappe 1 weist eine Stützwand 2 und eine Rückwand 3 auf. Zur Aufnahme eines Kindes ist die Stützwand 2 mit Beinöffnungen 6 versehen und eine Sitzplatte 4 vorgesehen. Es ist eine lagerveränderliche Abdeckung 5 angebracht, die die Beinöffnungen 6 verdecken kann, so dass eine zusätzliche Warenablage gebildet werden kann, sofern die Klappe als Kindersitz nicht genutzt wird.

Die Sitzplatte 4 und die Abdeckung 5 sind an der Stützwand 2 drehbar gelagert. Die Sitzplatte 4 ist darüber hinaus auch an der Rückwand 3 gelagert. Zur einfachen Montage hat es sich als sinnvoll erwiesen, eine Klappe 1 einzusetzen, wie sie bereits in der EP 1 562 816 B1 beschrieben ist. Eine solche weist zum einfachen Anbringen der Sitzplatte 4 eine so genannte Erweiterung an der Rückwand 3 auf. Diese Erweiterung vereinfacht das Einbringen der Sitzplatte 4, die mit Stützfingern ausgestattet ist. Darüber hinaus ist die Oberseite der Sitzplatte 4, wenn mehrere Wagen ineinander gestapelt sind, dem Boden zugerichtet. Verschmutzungen der Oberseite der Sitzplatte 4, z.B. aufgrund der Witterung, wenn die Wagen im Freien positioniert sind, können dadurch weitestgehend vermieden werden.

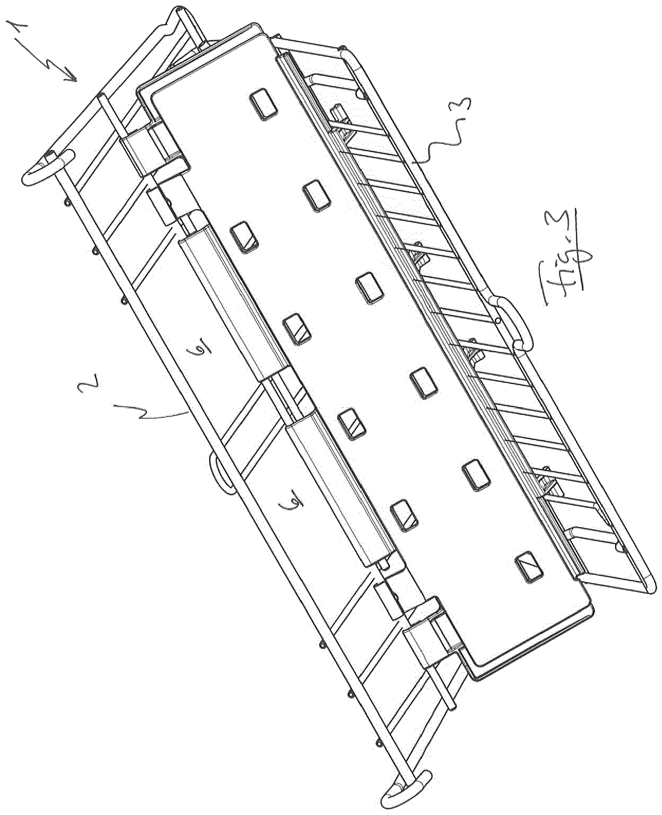

Die Abdeckung 5 liegt auf der Sitzplatte 4, so dass die Klappe 1 als Sitz für ein Kleinkind genutzt werden kann. Figur 3 zeigt diese Position der Klappe 1. Wird die Abdeckung 5 nach oben geklappt und verschließt in vertikaler Lage die Beinöffnungen 6 der Stützwand 2, entsteht ein neues Fach, das als zusätzliche Warenablage genutzt werden kann. Hierfür sind Sitzplatte 4 und Abdeckung 5 aus ebenen Flächen gebildet. Es hat sich als sinnvoll erwiesen, dass die Abdeckung 5 hinsichtlich ihrer Fläche kleiner ausgebildet ist als die Sitzplatte 4.

Um zu verhindern, dass Waren, wie z.B. flache Gegenstände, zwischen Sitzplatte 4 und Abdeckung 5 gelegt und an der Kasse von der Kassiererin nicht erkannt werden, ist die Abdeckung 5 vorzugsweise aus transparentem Material gebildet. Zudem kann die aus diesem transparenten Material gebildete Abdeckung 5 Öffnungen 5.1 aufweisen.

Auch kann die Abdeckung 5 aus dem Material der Sitzplatte 4 und somit aus einem nicht transparenten Material gebildet sein. Dann wäre die Abdeckung 5 mit Öffnungen 5.1 zu versehen.

Vorzugsweise sind Sitzplatte 4 und Abdeckung 5 aus einem Kunststoff gebildet.

Auch hat es sich als sinnvoll erwiesen, dass die Sitzplatte 4 ebenfalls Öffnungen 4.1 aufweist. Somit kann die Kassiererin, auch wenn die Klappe 1 geschlossen ist, auf einfache Art überprüfen, ob sich Waren zwischen Sitzplatte 4 und Abdeckung 5 befinden.

Die Öffnungen 4.1, 5.1 sind vorzugsweise rechteckig gebildet, eine Größe von 12 auf 20 mm hat sich als sinnvoll erwiesen. Diese Größe schließt ferner eine Verletzung der Finger von Kleinkindern, die sich auf dem Kindersitz befinden, aus.

Als Öffnungen 4.1, 5.1 wären auch quadratische oder runde Öffnungen oder aber Schlitze denkbar.

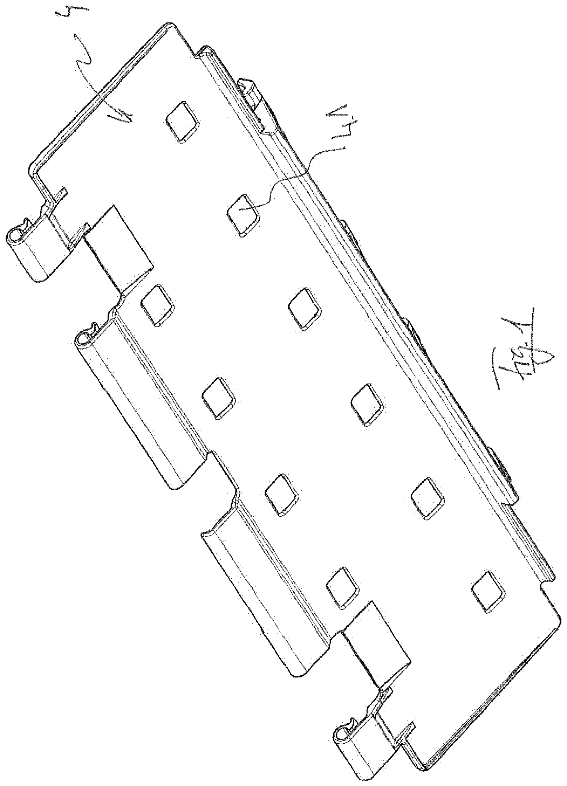

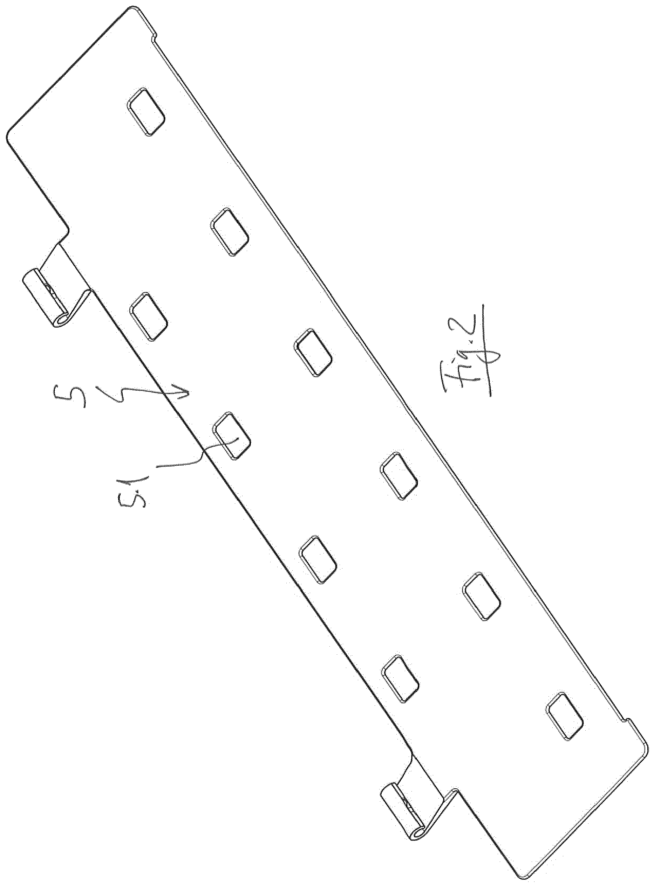

Wie aus den Figuren 1 und 2 ersichtlich ist, ist die Anzahl der Öffnungen 4.1, 5.1 identisch. Darüber hinaus hat es sich als sinnvoll erwiesen, dass die Öffnungen 4.1 der Sitzplatte 4 und die Öffnungen 5.1 der Abdeckung 5 gleich groß gebildet sind und die Öffnungen 4.1, 5,1 ferner jeweils übereinander gelagert sind. Auch das ermöglicht eine einfache Kontrolle durch die Kassiererin.

Eine Anordnung der Öffnungen 4.1, 5.1 in zwei Reihen, wobei eine Reihe vier und eine weitere Reihe sechs Öffnungen 4.1, 5.1 vorsieht, hat sich als vorteilhaft herausgestellt. Es ist aber auch sowohl eine andere Anzahl als auch Anordnung denkbar.

### Bezugszeichenliste

- 1: Klappe
- 2: Stützwand
- 3: Rückwand
- 4: Sitzplatte
- 4.1: Öffnung Sitzplatte
- 5: Abdeckung
- 5.1: Öffnung Abdeckung
- 6: Beinöffnungen

## Patentansprüche

1. Stapelbarer Transportwagen mit einem zur Aufnahme von Ware bestimmten Korb, dessen Rückseite durch eine in das Korbinnere schwenkbare Klappe (1) gebildet ist, wobei die Klappe (1) zur Aufnahme eines Kindes eine Beinöffnungen (6) aufweisende Stützwand (2), sowie eine Rückwand (3) und eine Sitzplatte (4) aufweist, wobei ferner eine lageveränderliche Abdeckung (5) vorgesehen ist, die die Beinöffnungen (6) verdeckt, so dass eine zusätzliche Warenablage gebildet werden kann, **dadurch gekennzeichnet, dass** die Abdeckung (5) aus einem transparenten Material gebildet ist oder, dass die Abdeckung (5) Öffnungen (5.1) aufweist und wobei Sitzplatte (4) und Abdeckung (5) an der Stützwand (2) drehbar gelagert sind.

2. Stapelbarer Transportwagen nach Anspruch 1, **dadurch gekennzeichnet, dass** auch die Sitzplatte (4) Öffnungen (4.1) aufweist.

3. Stapelbarer Transportwagen nach einem der vorhergehenden Ansprüche, **dadurch gekennzeichnet, dass** Sitzplatte (4) und Abdeckung (5) aus ebenen Flächen gebildet sind.

4. Stapelbarer Transportwagen nach einem der vorhergehenden Ansprüche, **dadurch gekennzeichnet, dass** die Abdeckung (5) kleiner ausgebildet ist als die Sitzplatte (4).

5. Stapelbarer Transportwagen nach einem der vorhergehenden Ansprüche, **dadurch gekennzeichnet, dass** die Öffnungen (4.1, 5.1) rechteckig gebildet sind.

6. Stapelbarer Transportwagen nach einem der vorhergehenden Ansprüche, **dadurch gekennzeichnet, dass** die Öffnungen (4.1, 5.1) eine Größe von 12 auf 20 mm aufweisen.

7. Stapelbarer Transportwagen nach einem der vorhergehenden Ansprüche, **dadurch gekennzeichnet, dass** Sitzplatte (4) und Abdeckung (5) aus Kunststoff gebildet sind.

8. Stapelbarer Transportwagen nach einem der vorhergehenden Ansprüche wenn abhängig von Anspruch 2, **dadurch gekennzeichnet, dass** die Öffnungen (4.1) der Sitzplatte (4) und die Öffnungen (5.1) der Abdeckplatte (5) gleich groß gebildet sind und die Öffnungen (4.1, 5.1) übereinander gelagert sind.

## Claims

1. A nestable trolley having a basket, intended for receiving goods, whose rear side is formed by a flap (1) pivotable into the basket interior, wherein for receiving a child, the flap (1) has a support wall (2) with leg openings (6), as well as a rear wall (3) and a sitting plate (4), wherein furthermore there is provided a cover (5) whose position can be altered and which covers the leg openings (6), so that an additional goods shelf can be formed, **characterised in that** the cover (5) is formed from a transparent material or **in that** the cover (5) has openings (5.1) and wherein sitting plate (4) and cover (5) are rotatably mounted on the support wall (2).

2. A nestable trolley according to claim 1, **characterised in that** the sitting plate (4) also has openings (4.1).

3. A nestable trolley according to any one of the preceding claims, **characterised in that** the sitting plate (4) and cover (5) are formed from plane surfaces.

4. A nestable trolley according to any one of the preceding claims, **characterised in that** the cover (5) is smaller than the sitting plate (4).

5. A nestable trolley according to any one of the preceding claims, **characterised in that** the openings (4.1, 5.1) are rectangular.

6. A nestable trolley according to any one of the preceding claims, **characterised in that** the openings (4.1, 5.1) have a size from 12 to 20 mm.

7. A nestable trolley according to any one of the preceding claims, **characterised in that** the sitting plate (4) and cover (5) are formed of plastics material.

8. A nestable trolley according to any one of the preceding claims when dependent on claim 2, **characterised in that** the openings (4.1) of the sitting plate (4) and the openings (5.1) of the cover plate (5) are formed the same in size and the openings (4.1, 5.1) are superimposed one on the other.

## Revendications

1. Chariot de transport imbricable, muni d'un panier qui est destiné à recevoir des marchandises et dont la face postérieure est formée d'un volet (1) apte à pivoter vers l'intérieur dudit panier, ledit volet (1) comprenant une paroi d'appui (2) percée d'ouvertures (6) de passage de jambes, en vue de recevoir un enfant, ainsi qu'une paroi postérieure (3) et une planchette d'assise (4), sachant qu'il est prévu, par ailleurs, un couvercle (5) à position variable qui recouvre lesdites ouvertures (6) de passage des jambes, permettant ainsi de former un reposoir supplémentaire à marchandises, **caractérisé par le fait que** le couvercle (5) est constitué d'un matériau transparent ; ou **par le fait que** ledit couvercle (5) comporte des orifices (5.1), la planchette d'assise (4) et ledit couvercle (5) étant montés à rotation sur la paroi d'appui (2).

2. Chariot de transport imbricable selon la revendication 1, **caractérisé par le fait que** la planchette d'assise (4) comporte pareillement des orifices (4.1).

3. Chariot de transport imbricable selon l'une des revendications précédentes, **caractérisé par le fait que** la planchette d'assise (4) et le couvercle (5) sont formés par des surfaces planes.

4. Chariot de transport imbricable selon l'une des revendications précédentes, **caractérisé par le fait que** le couvercle (5) est réalisé plus petit que la planchette d'assise (4).

5. Chariot de transport imbricable selon l'une des revendications précédentes, **caractérisé par le fait que** les orifices (4.1, 5.1) sont de forme rectangulaire.

6. Chariot de transport imbricable selon l'une des revendications précédentes, **caractérisé par le fait que** les orifices (4.1, 5.1) présentent un dimensionnement de 12 à 20 mm.

7. Chariot de transport imbricable selon l'une des revendications précédentes, **caractérisé par le fait que** la planchette d'assise (4) et le couvercle (5) sont constitués d'une matière plastique.

8. Chariot de transport imbricable selon l'une des revendications précédentes dépendant de la revendication 2, **caractérisé par le fait que** les orifices (4.1) de la planchette d'assise (4) et les orifices (5.1) du panneau de recouvrement (5) sont de même taille, et lesdits orifices (4.1, 5.1) sont agencés en superposition.
